# EUROPÄISCHE PATENTANMELDUNG

(11) **EP 1 020 667 A2**
(43) Veröffentlichungstag der Anmeldung: **19.07.2000**
(21) Anmeldenummer: 99123731.4
(22) Anmeldetag: 30.11.1999
(51) Int. Cl.: F16J 9/06, F16J 9/20

(54) **Verfahren zum Einbau eines Ölabstreifkolbenringes**

(30) Priorität: 15.01.1999 DE 19901284
(71) Anmelder: Federal-Mogul Burscheid GmbH, 51399 Burscheid (DE)
(72) Erfinder: Brillert, Hans-Rainer, 51399 Burscheid (DE)

(57) **Zusammenfassung**

Die Erfindung betrifft ein Verfahren zum Einbau eines axial niedrigen Ölabstreifkolbenringes in die Nut 5 eines Kolbens 9. Der Ölabstreitkolbenring besteht aus einem Spreizring 2 und zwei Lamellenringen 4, 4'.
Die Stoßenden des Spreizringes 2 werden innerhalb der Nut 5 stoffschlüssig miteinander verbunden.

## Beschreibung

Die Erfindung betrifft ein Verfahren zum Einbau eines axial niedrigen Ölabstreifkolbenringes in einen Kolben einer Brennkraftmaschine, wobei der Ölabstreifkolbenring einen gebogenen federnden Spreizring aufweist, welcher, mit sich in axialer Richtung erstreckenden Wellungen, zur Abstützung von Lamellenringen versehen ist und an einer Stelle offen ist und dort Stoßenden bildet, die miteinander in Druckkontakt gelangen.

Zur Unterstützung der radialen Anpressung der Kolbenringe an die Zylinderwand werden Lamellenringe über Spreizringe aus gestanzten, bandförmigen und gebogenen Blechstreifen eingesetzt. Spreizringe sind in verschiedenen Ausführungen bekannt. Bei der Montage des Kolbenringes in die korrespondierende Nut des Kolbens kommt es immer wieder vor, daß die Stoßenden der Spreizringe sich überlappen und damit nicht funktionsgerecht angeordnet sind. Zur Vermeidung dieses Problems werden bei zahlreichen Spreizkonstruktionen im Bereich der Stoßenden Maßnahmen durchgerührt, die eine gute Führung der Stoßenden sichern sollen.

Aus der DE PS 4310652 ist es bekannt, daß die Stoßenden mittels eines zusätzlichen Metallstabes gegeneinander gesichert werden.
Der Einsatz zusätzlicher Verbindungselemente setzt voraus, daß der Spreizring eine relativ große axiale und radiale Bauhöhe aufweist, andernfalls können die zusätzlichen Verbindungselemente nicht mehr mit dem Spreizring montiert werden.

Bei modernen Motoren werden immer kleinere axiale Höhen bei den Kolbenringen angestrebt. Je kleiner und filigraner die Kolbenringe ausgebildet werden, desto schwieriger wird die Montage der Einzelteile.

Aus der DE PS 4027071 ist ein Ölabstreifkolbenring mit einem gattungsgemäßen Spreizring zu entnehmen. Mit derartigen Spreizringen lassen sich sehr kleine axiale Bauhöhen realisieren. Damit die Stoßenden dieser Spreizringe in eingebautem Zustand die richtige Lage einnehmen, wurden bei diesem Spreizring die Stoßenden so ausgebildet, daß sie einen axialen Öffnungsspalt mit einem definierten Winkel bilden. Auf den Einsatz von zusätzlichen Verbindungselementen wurde so verzichtet.
Der Nachteil dieser Konstruktion ist darin zu sehen, daß bei jedem Spreizring die Stoßenden in einem zusätzlichen Arbeitsgang bearbeitet werden müssen, um den erforderlichen Öffnungspalt zu erzeugen. Darüberhinaus besteht auch bei dieser Konstruktion die Möglichkeit, daß beim Einbau der Einzelteile in die Kolbennut, die Stoßenden übereinander gedrückt werden.

Der Erfindung liegt die Aufgabe zugrunde, ein Verfahren bereit zu stellen, mit dem gattungsgemäße Kolbenringe sicher und funktionsrichtig montierbar sind, ohne daß zusätzliche kostenintensive Maßnahmen an den einzelnen Bauteilen notwendig sind.

Diese Aufgabe wird erfindungsgemäß durch die Merkmale des Patentanspruch 1 gelöst. Vorteilhafte Ausgestaltungen der Erfindung ergeben sich aus den Unteransprüchen.

Das erfindungsgemäße Verfahren geht von der Erkenntnis aus, daß mehrteilige Ölabstreifkolbenringe während des Einbaus in die Kolbennut getrennt gehandhabt werden. Der Spreizring wird als Einzelteil in die Kolbenringnut eingelegt. Die Stoßenden werden anschließend zueinander ausgerichtet und fest miteinander verbunden. In der Ringnut des Kolbens ist so ein in sich geschlossener Spreizring angeordnet, dessen Glieder sich nicht mehr überlappen können. Die Verbindung bleibt während des Betriebes des Kolbens über die gesamte Lebensdauer des Systems erhalten.
Die Erfindung ist anhand einer Prinzipskizze in der Zeichnung dargestellt und wird im folgenden näher erläutert.

Es zeigen:
- Figur 1: Ausschnitt eines erfindungsgemäßen Ölabstreifkolbenringes
- Figur 2: Spreizring eines Ölabstreifkolbenringes gemäß Figur 1 in der Kolbennut

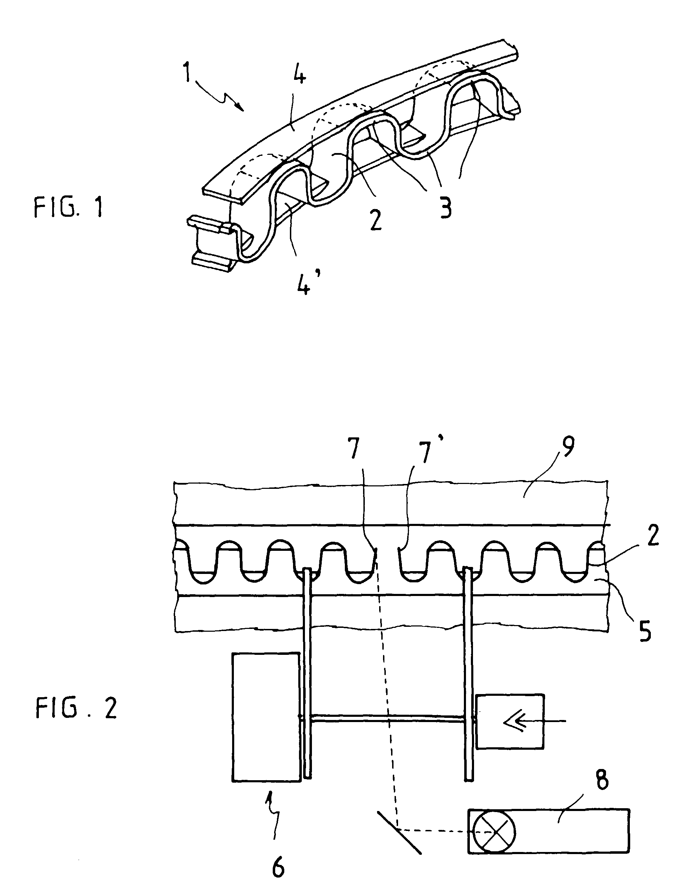

Die Erfindung geht von einer Ölabstreifkolbenhalterung gemäß Figur 1 aus. Der Ölabstreifkolbenring 1 weist eine sehr geringe axiale Höhe (< 2mm) auf und besteht aus einem Spreizring 2 mit in axialer Richtung sich erstreckenden Wellungen 3 zur Abstützung von Lamellenringen 4, 4'.
Der Ölabstreifkolbenring ist für den Einsatz in Kolben von Brennkraftmaschinen konzipiert.

In der Figur 2 ist ein, in einer Nut 5 eines Kolbens 9 eingelegter Spreizring 2 des Ölabstreifkolbenringes 1 dargestellt.
Mittels einer Vorrichtung 6 werden die Stoßenden 7, 7' des Spreizringes gegeneinander ausgerichtet, derart, daß die Stoßenden 7, 7' gegeneinanderliegen ohne sich zu überlappen. Mittels einer geeigneten Schweißvorrichtung 8 werden anschließend die Stoßenden 7, 7' stoffschlüssig verbunden.
Der Spreizring 2 ist nun als geschlossener Ring ausgebildet und kann nicht mehr aus der Nut 5 des Kolbens 9 herausfallen. Schließlich können die Lamellenringe 4, 4' in die Nut 5 eingelegt werden, ohne daß sich die Stoßenden 7, 7' des Spreizringes 2 hierdurch verschieben.

## Patentansprüche

1. Verfahren zum Einbau eines axial niedrigen Ölabstreifkolbenringes in einem Kolben einer Brennkraftmaschine, wobei der Ölabstreifkolbenring einen gebogenen federnden Spreizring aufweist, welcher, mit sich in axialer Richtung erstreckenden Wellungen, zur Abstützung von Lamellenringen versehen ist und an einer Stelle offen ist und dort Stoßenden bildet, die miteinander in Druckkontakt gelangen, dadurch gekennzeichnet, daß zunächst der Spreizring (2) in einer Nut (5) des Kolbens (9) angeordnet wird und die Stoßenden (7,7') zueinander axial und radial ausgerichtet und anschließend durch Schweißen miteinander verbunden werden und schließlich die Lamellenringe (4,4') in die Nut (5) eingesetzt werden.

2. Verfahren nach Anspruch 1, dadurch gekennzeichnet, daß die Stoßenden (7,7') durch ein Laserschweißverfahren miteinander verbunden werden.

3. Verfahren nach den Ansprüchen 1 und 2, dadurch gekennzeichnet, daß der Spreizring (2) eine axiale Höhe zwischen 1<=h<=2 mm aufweist.

4. Ölabstreifkolbenring bestehend aus einem gebogenen federnden Spreizring, der, mit sich in axialer Richtung erstreckenden Wellungen, zur Aufnahme von Lamellenringen versehen ist und an einer Stelle offen ist und dort Stoßenden bildet, die miteinander in Druckkontakt stehen, nach den Ansprüchen 1 bis 3, dadurch gekennzeichnet, daß die Stoßenden (7,7') des Spreizringes (2) miteinander verschweißt sind, so daß ein in sich geschlossener Spreizring (2) gebildet ist.
